# EUROPÄISCHE PATENTANMELDUNG

(11) **EP 4 235 002 A1**
(43) Veröffentlichungstag der Anmeldung: **30.08.2023**
(21) Anmeldenummer: 22158910.4
(22) Anmeldetag: 25.02.2022
(51) Int. Cl.: F16L 11/15, F16L 11/20, F16L 39/02, F16L 59/065, F16L 59/14, F16L 59/18, F16L 27/10, F16L 51/04

(54) **THERMISCH ISOLIERTE TRANSFERLEITUNG**

(71) Anmelder: MAGNA Energy Storage Systems GesmbH, 8261 Sinabelkirchen (AT)
(72) Erfinder: KOTNIG, Claudio, 8302 Nestelbach (AT); PUCHLEITNER, Rainer, 8052 Graz (AT)
(74) Vertreter: Zangger, Bernd

(57) **Zusammenfassung**

Eine thermisch isolierte Transferleitung für ein tiefkaltes Fluid, umfassend eine Prozessleitung (1) zur Führung des Fluids, eine radial außerhalb der Prozessleitung (1) liegende, entlang der Längsrichtung der Prozessleitung (1) verlaufende Isolationshülle (2), wobei zwischen der Prozessleitung (1) und der Isolationshülle (2) ein Isolationsraum (3), beispielsweise ein Vakuumraum, eingerichtet ist, wobei die Prozessleitung (1) und die Isolationshülle (2) gemeinsam, zumindest abschnittsweise entlang ihrer Erstreckung in Längsrichtung der Transferleitung, eine U-Form oder V-Form oder Mäanderform oder Spiralform aufweisen.

## Beschreibung

### Gebiet der Erfindung

Die vorliegende Erfindung betrifft eine thermisch isolierte Transferleitung für ein tiefkaltes Fluid, insbesondere eine Transferleitung zum Anschluss an einen kryogenen Tank.

### Stand der Technik

Kryogene Tanks zum Speichern von tiefkalten Fluiden, insbesondere zum Speichern von Wasserstoff, sind bekannt. Kryogene Tanks können auch mobil eingesetzt werden, beispielsweise zum Transport von Kraftstoff in Fahrzeugen und Flugzeugen.

Um das gespeicherte Medium eines kryogenen Tanks beispielsweise in einen anderen kryogenen Tank zu transferieren, können Transferleitungen verwendet werden, die aus zwei konzentrischen Leitungsrohren mit einem Vakuum zwischen den Leitungsrohren bestehen können. Derartige Transferleitungen werden üblicherweise für statische Anwendungen genutzt und sind nicht für die Aufnahme dynamischer Lasten geeignet.

Durch ihre starre Bauweise, die aus der Notwendigkeit einer Superisolation, mit Vakuum und beispielsweise MLI (Multilayer Insulation) zwischen zwei Leitungsrohren resultiert, können axiale und rotatorische Kräfte auf die Leitung nicht gut aufgenommen werden. Durch den Einsatz von Faltenbälgen können Bewegungen in der Längsrichtung oder auf Biegung zwar kompensiert werden, jedoch haben Faltenbälge Nachteile, wie zum Beispiel geringe mechanische Belastbarkeit und dass diese nicht in der Lage sind, große Torsionsmomente und eine damit verbundene Verdrillung aufzunehmen. Die bekannten Lösungen sind daher kaum für mobile Anwendungen von Transferleitungen geeignet.

### Zusammenfassung der Erfindung

Es ist eine Aufgabe der Erfindung, thermisch isolierte Transferleitungen der genannten Art in dieser Hinsicht zu verbessern und insbesondere eine thermisch isolierte Transferleitung anzugeben, die für mobile Anwendungen geeignet ist und insbesondere auch axiale Kräfte und/oder Torsionsmomente gut aufnehmen kann.

Die Lösung der Aufgabe erfolgt durch eine thermisch isolierte Transferleitung für ein tiefkaltes Fluid, umfassend eine radial innen liegende Prozessleitung zur Führung des Fluids, eine radial außerhalb der Prozessleitung liegende, entlang der Längsrichtung der Prozessleitung verlaufende und bevorzugt konzentrische Isolationshülle, wobei zwischen der Prozessleitung und der Isolationshülle ein Isolationsraum, beispielsweise ein Vakuumraum, eingerichtet ist, wobei die Prozessleitung und die Isolationshülle gemeinsam, zumindest abschnittsweise entlang ihrer Erstreckung in Längsrichtung der Transferleitung, eine U-Form oder V-Form oder Mäanderform oder Spiralform aufweisen.

Erfindungsgemäß weist eine Transferleitung, genauer gesagt sowohl die das Fluid direkt führende Prozessleitung als auch die, die Prozessleitung umgebende Isolationshülle, entlang deren Längsrichtung eine U-Form oder V-Form oder die Form einer Mäander oder Spirale auf. Dabei bedeutet "U-Form" oder "V-Form", dass zumindest ein, bevorzugt aber mehrere, zumindest zwei, U bzw. V Ausformungen, axial hintereinander vorgesehen sind. Die U, V, Mäander- und Spiralformen können eher rund, also als Biegungen, oder auch eher eckig, als Ecken, ausgebildet sein. Statt eine lineare Verbindung zwischen Anfang und Ende der Prozessleitung und Isolationshülle vorzusehen, sind somit Ausbuchtungen vorgesehen, die wieder zurückgeführt werden müssen. Somit wird eine längere Leitungslänge in Kauf genommen, die zweidimensional ausgebildet ist, beispielsweise eine Mäander oder U- oder V-Formen bildet, oder dreidimensional ausgebildet ist, so dass benachbarte Mäander- oder U- oder V-Formen zueinander verdreht sind und/oder eine Spirale bilden, um axiale Kräfte und/oder Torsionsmomente besser aufnehmen zu können. Dadurch können beispielsweise Relativbewegungen zwischen zwei, durch die Transferleitung verbundenen Tanks besser in der Transferleitung aufgenommen werden, insbesondere Torsionen und/oder Axialbewegungen. Die Transferleitung ist daher bevorzugt vorgeformt, vorzugsweise im Wesentlichen mäanderförmig oder spiralisiert, bzw. bildet eine Feder, insbesondere Zylinderfeder.

Weiterbildungen der Erfindung sind in den abhängigen Ansprüchen, der Beschreibung sowie den beigefügten Zeichnungen angegeben.

Bevorzugt ist die Prozessleitung zumindest abschnittsweise ein Wellrohr oder Wellschlauch und besonders bevorzugt ist auch die Isolationshülle zumindest abschnittsweise ein Wellrohr oder Wellschlauch.

Die Isolationshülle kann auch konzentrisch von weiteren Isolationshüllen umgeben sein, die jeweils wieder als Wellenrohre oder Wellschläuche ausgebildet sein können, so dass jeweils zwischen den Isolationshüllen Isolationsräume, beispielsweise Vakuumräume, eingerichtet sind.

Die Prozessleitung und die Isolationshülle weisen bevorzugt gemeinsam, über im Wesentlichen die gesamte Erstreckung in Längsrichtung der Transferleitung, eine U-Form oder V-Form oder Mäanderform oder Spiralform auf, oder über zumindest 40%, bevorzugt zumindest 60 %, besonders bevorzugt zumindest 80% der Erstreckung in Längsrichtung der Transferleitung. Vorzugsweise weist die gesamte Transferleitung, zumindest Prozessleitung, Isolationshülle und dazwischen angeordneter Isolationsraum, über die gesamte Länge die U-Form oder V-Form oder Mäanderform oder Spiralform auf, ausgenommen Anschluss- oder Koppelbereiche an den Enden der Transferleitung. Dabei bedeutet, wie erwähnt, "U-Form" oder "V-Form", dass bevorzugt mehrere U- bzw. V-Ausformungen axial hintereinander angeordnet, den angegebenen Erstreckungsbereich bilden können.

Bevorzugt sind die Prozessleitung und die Isolationshülle konzentrisch zueinander angeordnet, wobei die Konzentrizität auch entlang derjenigen Abschnitte entlang der Erstreckung der Transferleitung in Längsrichtung besteht, die eine U-Form oder V-Form oder Mäanderform oder Spiralform aufweisen.

Vorzugsweise sind zwischen der Prozessleitung und der Isolationshülle Abstandshalter eingerichtet, um einen Abstand zwischen Prozessleitung und Isolationshülle sicherzustellen, auch entlang derjenigen Abschnitte entlang der Erstreckung der Transferleitung in Längsrichtung, die eine U-Form oder V-Form oder Mäanderform oder Spiralform aufweisen.

Bevorzugt ist im Isolationsraum ein Vakuum und/oder eine Feststoffisolation, und/oder ein Inertgas, zum Beispiel CO₂, und/oder eine thermisch reflektive Schicht, zum Beispiel eine Multilayer Insulation (MLI), eingerichtet. Das Inertgas ist ein Gas, das einen hohen Verfestigungspunkt aufweist, jedenfalls höher als derjenige von Luft und/oder einen Tripelpunkt größer der Kondensationstemperatur von Sauerstoff. Die Feststoffisolation verwendet zumindest einen oder auch mehrere, gemischte oder in Schichten angeordnete, thermisch schlecht leitende Feststoffe. Eine thermisch reflektive Schicht ist eine Schicht, die eine Wärmeleitung durch Strahlung reduziert.

Vorzugsweise ist im Isolationsraum abschnittsweise ein Sorptionsmittel angeordnet, insbesondere Zeolith, Aktivkohle und/oder Getter, zum Beispiel Barium.

Vorzugsweise verläuft eine Schutzhülle entlang der Erstreckung der Isolationshülle radial außerhalb der Isolationshülle, wobei die Schutzhülle bevorzugt keine U-Form oder V-Form oder Mäanderform oder Spiralform aufweist, wobei die Schutzhülle besonders bevorzugt eine Zylindermantelform aufweist, also ebene Wände. Die thermisch isolierte Kryo-Leitung, bevorzugt in Form einer "Zylinderfeder", wird somit mittels eines außenliegenden Schutzrohres bevorzugt zwischen zwei Tanks geführt.

Bevorzugt ist zwischen der Schutzhülle und der Isolationshülle, beispielsweise innen an der Schutzhülle oder außen an der Isolationshülle oder im gesamten Zwischenraum, zumindest abschnittsweise ein Dämpfungsmaterial und/oder ein elastisches Material angeordnet ist. Das Dämpfungsmaterial und/oder elastische Material kann zur Dämpfung von Schwingungen und/oder zur Abstützung der vorgeformten, insbesondere spiralisierten Leitungen und zum Schutz an den Kontaktpunkten der Isolationshülle und der Schutzhülle dienen.

Bevorzugt umfasst die Schutzhülle zumindest zwei axial gegeneinander bewegbare Hüllenteile, wobei die Hüllenteile bevorzugt durch einen Faltenbalg und/oder eine Tülle und/oder eine Hülse miteinander verbunden sind und/oder radial geschachtelt sind, so dass ein Hüllenteil in einem Überlappungsabschnitt radial innerhalb oder außerhalb des anderen Hüllenteils verschiebbar ist. Somit wird ein Längenausgleich für die Schutzhülle ermöglicht.

Vorzugsweise ist ein Kuppelelement zur fluidleitenden Anbindung der Transferleitung an einen kryogenen Tank an zumindest einem Ende der Transferleitung ausgebildet, bevorzugt an beiden Enden der Transferleitung.

Das Kuppelelement umfasst bevorzugt eine Überwurfmutter, die dazu eingerichtet ist, dass die Prozessleitung der Transferleitung an einer Tankprozessleitung befestigt wird, so dass eine fluidleitende Verbindung zwischen der Prozessleitung und der Tankprozessleitung hergestellt wird. Die Überwurfmutter befestigt bevorzugt eine Endhülse der Prozessleitung an der Tankprozessleitung.

Bevorzugt umfasst das Kuppelelement ein Endstück, wobei die Isolationshülle der Transferleitung in das Endstück übergeht. Das Endstück ist dabei nicht als Wellrohr oder Wellschlauch ausgebildet, sondern mechanisch fest ausgebildet.

Vorzugsweise umfasst das Kuppelelement eine Anschlusshülse, wobei die Anschlusshülse konzentrisch radial außen am Endstück angeordnet ist und am Endstück befestigt ist, bevorzugt mit dem Endstück verschweißt, wobei die Befestigung bzw. Verschweißung vorzugsweise an einem axialen Ende der Anschlusshülse erfolgt, das der Isolationshülle zugewandt ist, also vom zu koppelnden Tank abgewandt ist. Durch eine solche Anschlusshülse kann der thermische Widerstand trotz kompakter Bauweise erhöht werden.

Bevorzugt umfasst das Kuppelelement eine Schiebemuffe, wobei die Schiebemuffe konzentrisch radial außen am Endstück und/oder an der Anschlusshülse angeordnet ist und gegenüber dem Endstück und/oder der Anschlusshülse axial verschiebbar ist. Besonders bevorzugt liegt die Schiebemuffe radial außerhalb der Anschlusshülse, in einem Bereich in dem radial innerhalb der Anschlusshülse auch das Endstück der Isolationshülle und wiederum radial innerhalb der Isolationshülle die Prozessleitung verläuft. Die Schiebemuffe ist axial gegenüber der Anschlusshülse verschiebbar. Die Schiebemuffe weist bevorzugt an ihrem der Isolationshülle abgewandten axialen Ende eine Flanschfläche auf, zur Befestigung an einem Anschlussflansch der an dem zu koppelnden Bauteil, insbesondere dem Tank, ausgebildet ist.

Vorzugsweise ist eine Mutter konzentrisch radial außen an der Anschlusshülse angeordnet und dazu eingerichtet, die Schiebemuffe axial gegen einen Anschlag der Anschlusshülse und/oder axial gegen einen Anschlussflansch des kryogenen Tanks zu drücken.

Vorzugsweise ist das Endstück in einem axialen Abschnitt, in dem das Endstück von der Anschlusshülse umgeben ist, zumindest abschnittsweise durch einen Faltenbalg gebildet. Durch einen solchen Faltenbalg kann der thermische Widerstand trotz kompakter Bauweise weiter erhöht werden. Zudem wird hierdurch ein Ausgleich von Bauteiltoleranzen ermöglicht und kann auch die Anpresskraft der Prozessleitung an einer Tankprozessleitung des zu kuppelnden Bauteils erhöht werden.

Die Schweißstelle Anschlusshülse, also die Schweißstelle Anschlusshülse und Endstück, ist bevorzugt axial zwischen dem Faltenbalg und der Isolationshülle am Endstück ausgebildet.

Bevorzugt weist das Endstück einen Vakuumstutzen auf, wobei durch den Vakuumstutzen ein Vakuum im Isolationsraum herstellbar ist oder der Isolationsraum mit einem Inertgas geflutet werden kann.

Bevorzugt weist das Endstück einen Vakuumstutzen Kupplungsraum auf, wobei durch den Vakuumstutzen Kupplungsraum ein Vakuum im Kupplungsraum herstellbar ist oder der Kupplungsraum mit einem Inertgas geflutet werden kann.

Bevorzugt ist innerhalb des Endstücks ein Sorptionsmaterial angeordnet, insbesondere Zeolith, Aktivkohle und/oder Getter, zum Beispiel Barium.

### Kurzbeschreibung der Zeichnungen

Die Erfindung wird im Folgenden beispielhaft unter Bezugnahme auf die Zeichnungen beschrieben.
- Fig. 1: ist eine Schnittansicht einer erfindungsgemäßen thermisch isolierten Transferleitung von vorne.
- Fig. 2: ist eine Schnittansicht einer erfindungsgemäßen Transferleitung gemäß Schnitt A-A der Fig. 1.
- Fig. 3: ist eine Schnittansicht einer weiteren erfindungsgemäßen Transferleitung gemäß Schnitt A-A der Fig. 1.
- Fig. 4: ist eine Schnittansicht einer weiteren erfindungsgemäßen Transferleitung gemäß Schnitt A-A der Fig. 1.
- Fig. 5: ist eine Schnittansicht eines Kuppelelements an einem Ende einer erfindungsgemäßen Transferleitung, in einem offenen Zustand.
- Fig. 6: ist eine Schnittansicht eines Kuppelelements an einem Ende einer erfindungsgemäßen Transferleitung gemäß Fig. 5, in einem geschlossenen Zustand.
- Fig. 7a: ist eine Schnittansicht eines Kuppelelements gemäß Fig. 5 in einem ersten Prozessschritt beim Schließen des Kuppelelements.
- Fig. 7b: ist eine Schnittansicht eines Kuppelelements gemäß Fig. 5 in einem zweiten Prozessschritt beim Schließen des Kuppelelements.
- Fig. 7c: ist eine Schnittansicht eines Kuppelelements gemäß Fig. 5 in einem dritten Prozessschritt beim Schließen des Kuppelelements.

### Detaillierte Beschreibung der Erfindung

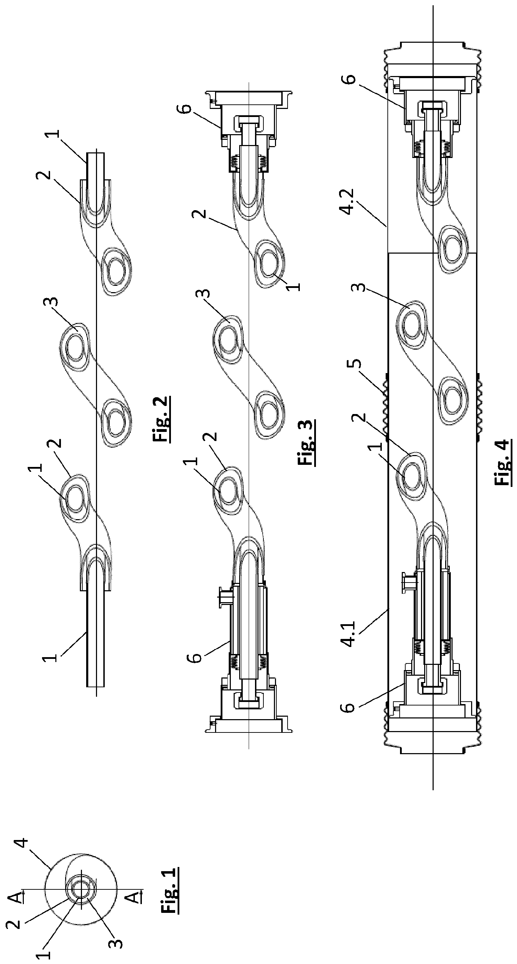

In Fig. 1 ist eine ist eine Schnittansicht einer erfindungsgemäßen thermisch isolierten Transferleitung von vorne dargestellt.

Die Transferleitung umfasst eine radial innen liegende Prozessleitung 1 zur Führung eines Fluids, insbesondere von Wasserstoff, und eine radial außerhalb der Prozessleitung 1 liegende, entlang der Erstreckung der Prozessleitung 1 verlaufende und zur Prozessleitung 1 konzentrische Isolationshülle 2. Zwischen der Prozessleitung 1 und der Isolationshülle 2 ist ein Isolationsraum 3 eingerichtet.

Sowohl die Prozessleitung 1, als auch die Isolationshülle 2 sowie der Isolationsraum 3 weisen in Längsrichtung der Transferleitung eine Spiralform auf, die in Fig. 1 angedeutet ist.

In Fig. 1 ist ferner eine Schutzhülle 4 dargestellt, die radial außerhalb der Isolationshülle 2 angeordnet ist und im Wesentlichen in Längsrichtung der Prozessleitung 1 und der Isolationshülle 2 verläuft. Die Schutzhülle 4 weist keine Spiralform auf, sondern ist eben ausgebildet und weist somit eine Zylindermantelform auf.

Die Fig. 2, 3 und 4 zeigen eine Transferleitung gemäß Fig. 1 von der Seite, entsprechend dem Schnitt A-A in Fig. 1, wobei in Fig. 2 jedoch keine Schutzhülle dargestellt oder vorgesehen ist, in Fig. 3 zusätzlich zur Prozessleitung 1 und der Isolationshülle 2 auch Kuppelelemente 6 an beiden Enden der Transferleitung dargestellt oder vorgesehen sind und in Fig. 4 auch eine Schutzhülle 4, wie in Fig. 1, über die gesamte Länge der Transferleitung verläuft.

Innerstes Element einer erfindungsgemäßen Transferleitung bildet somit die Prozessleitung 1, insbesondere ein Wellrohr, in dem das tiefkalte Fluid transportiert wird. Die Prozessleitung 1 ist von einem oder mehreren konzentrischen Wellschläuchen, nämlich Isolationshüllen 2, umgeben, die mit dem jeweils nächstinnerem Wellschlauch durch einen Isolationsraum 3 und optional MLI thermisch isoliert sind. Der Abstand zwischen den Schläuchen 1, 2 ist durch eine geeignete Vorrichtung gewährleistet, zum Beispiel durch Spacer, die beispielsweise in Längsrichtung der Transferleitung verlaufen können. Zusätzlich können Sorptionsmittel zur Verbesserung der Langzeitstabilität des Vakuums in den Isolationsraum 3 eingebracht sein. Die Enden der Transferleitung sind mit entsprechenden Fittings bzw. Anschlüssen, insbesondere den Kuppelelementen 6, abgeschlossen.

Die Prozessleitung wird zum Schutz und zur Führung innerhalb eines außenliegenden Hüllrohres, nämlich der Schutzhülle 4, beispielsweise zwischen zwei Tanks geführt, wie in Fig. 4 dargestellt. Dieses Hüllrohr 4 dient vornehmlich dem Schutz gegen Steinschläge, Witterung und Korrosion, aber sichert die Vakuumleitung auch gegen ein Berühren und die damit verbundenen Risiken durch die sehr tiefen Temperaturen ab. Das außenliegende Hüllrohr, Schutzhülle 4, wird zudem für eine sichere Montage sowie als dämpfendes Element verwendet. Die Dämpfung kommt durch eine direkte Verpressung der Vakuumleitung 1, 2, die mit Kunststoff ummantelt sein kann, gegen das außenliegende Wellrohr zustande und verhindert eine Beschädigung durch eine Modulation von Frequenz und Minimierung der Schwingungsamplituden.

Die Schutzhülle 4 umfasst zumindest zwei axial gegeneinander bewegbare Hüllenteile 4.1, 4.2, wobei die Hüllenteile 4.1, 4.2 durch einen Faltenbalg 5 miteinander verbunden sind und radial geschachtelt sind, so dass ein Hüllenteil 4.1 in einem Überlappungsabschnitt radial innerhalb oder außerhalb des anderen Hüllenteils 4.2 axial verschiebbar ist.

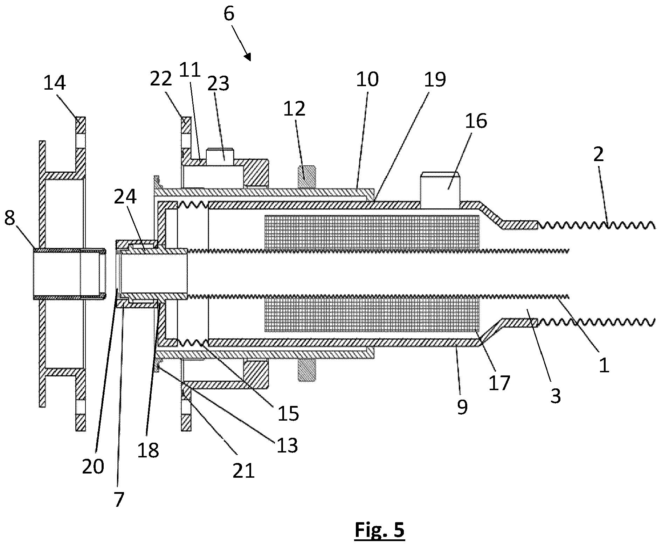

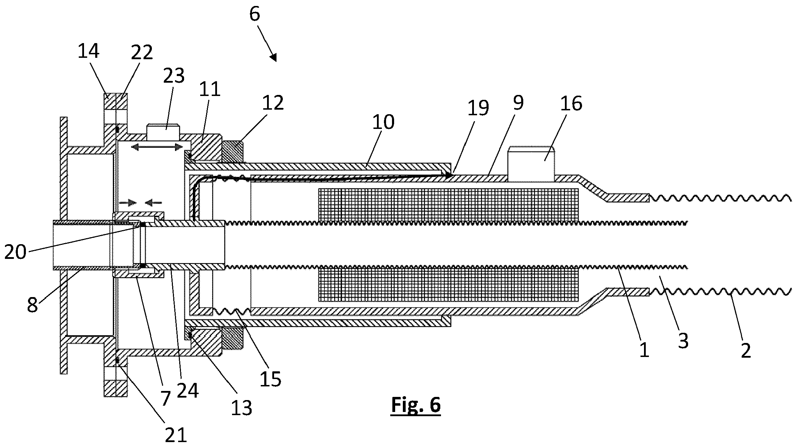

Zumindest an einem Ende, in der in Fig. 3 und Fig. 4 dargestellten Ausführung an beiden Enden, weist die Transferleitung Kuppelelemente 6 auf, die in Fig. 5 und Fig. 6 genauer dargestellt sind.

Ein Kuppelelement 5 umfasst folgende Teile (siehe Fig. 5): Die Isolationshülle 2 geht über in ein mechanisch festes Endstück 9. Die Prozessleitung 1 hat ebenfalls eine feste Hülse an deren Ende, nämlich die Endhülse 24, die mit dem Endstück 9 an einer Schweißstelle Endstück 18 verschweißt ist.

Das Kuppelelement 6 ermöglicht eine Erhöhung des thermischen Leitungswiderstandes bei kompakter Bauweise des Endstücks der Transferleitung. Die Prozessleitung 1 und die Isolationshülle 2 sind im Endstück, nämlich Kuppelelement 6, dicht verschweißt, wie zuvor beschrieben, und diese Schweißstelle 18 stellt eine gute thermische Verbindung dar. Zur Verringerung des Wärmeeintrags in die tiefkalte Flüssigkeit entlang der Isolationshülle 2 des Endstücks und zur Vermeidung von Temperaturen unter dem Verflüssigungspunkt von Sauerstoff an der Isolationshülle 2 des Endstücks wird der thermische Widerstand gegen Wärmeleitung in der Isolationshülle 2 des Endstücks Kuppelelement 6 erhöht. Bei vorgegebenem Material, zum Beispiel Stahl, kann durch diese Geometrieadaption, insbesondere durch einen kleinen Querschnitt und langen Leitungspfad, der Widerstand erhöht werden (der Wärmeübertragungsweg ist in Fig. 6 als Pfeil eingezeichnet):
- Ein bevorzugt dünnwandige Faltenbalg 15 bildet einen Abschnitt des Endstücks 9 aus und erhöht den Wärmewiderstand durch die Verlängerung des Leitungspfades aufgrund der Wellenform.
- Eine Anschlusshülse 10 erhöht den Wärmewiderstand durch die Verlängerung des Leitungspfades aufgrund der in Richtung Vakuumstutzen 16 versetzten Schweißverbindung 19 mit dem Endstück 9.

Im Folgenden wird die Montage des Kuppelelements und der Ausgleich von Montagetoleranzen zur Gewährleistung der benötigten Anpresskräfte der Dichtungen beschrieben - siehe hierzu v.a. Fig. 6.

Die Prozessleitung 1 und die Isolationshülle 2 müssen dicht mit dem Tank/Dewar umfassend die Tankprozessleitung 8 und den Anschlussflansch 14 verbunden werden. Zunächst werden die beiden Prozessleitungen 8, 1 stumpf mit einer Überwurfmutter 7 verbunden. Durch Anziehen der Überwurfmutter 7 wird eine Dichtung Prozessleitung 20 stirnseitig zwischen den Rohrenden gepresst. Der Zugang zur Montage der Prozessleitung 1 wird durch das Zurückschieben einer Schiebemuffe 11 ermöglicht, die auf der Anschlusshülse 10 gleitet. Nach Verbindung der Prozessleitungen 1, 8 wird die Schiebemuffe 11 mit einer Mutter 12 gegen die Dichtfläche 13 an der Anschlusshülse 10, insbesondere an einem Anschlag der Anschlusshülse 10, fixiert, wobei ein Flansch der Schiebemuffe 11 gegen den Anschlussflansch 14 des Tanks/Dewars gepresst und damit die Transferleitung vom Tank/Dewar gedrückt wird. Die entgegengesetzten Kräfte sind in Fig. 6 als Pfeile dargestellt. Dies hat zur Folge, dass die (benötigten) Anpresskräfte der Dichtung Prozessleitung 20 zwischen den Prozessleitungen 1, 8 und/oder der Dichtungen Dichtung Anschlusshülse 13, zwischen Anschlusshülse 10 und Schiebemuffe 11 und Dichtung Anschlussflansch 21, zwischen der Schiebemuffe 11, bzw. genauer der Flanschfläche 22 der Schiebemuffe 11, und dem Anschlussflansch 14 des Tanks/Dewars verringert und die Dichtwirkung reduziert wird. Der Faltenbalg 15 im Endstück 9 kompensiert diesen Anpresskraftverlust teilweise. Die Position des Faltenbalgs 15 im Endstück 9 verringert dessen Belastung mit Torsions- und Biegemomenten.

Somit dient die Anschlusshülse 10 zur Erhöhung des thermischen Widerstands trotz kompakter Bauweise, der Faltenbalg 15 zur Erhöhung des thermischen Widerstands trotz kompakter Bauweise, zum Ausgleich von Montagetoleranzen und zur Gewährleistung von ausreichender Anpresskraft für die Dichtwirkung und die Schiebemuffe 11 ermöglicht den Zugang zu den Prozessleitungen 1, 8 und bildet einen Anschluss, nämlich an einem Vakuumstutzen Kupplungsraum 23, zur Evakuierung/Inertisierung des Kupplungsraums.

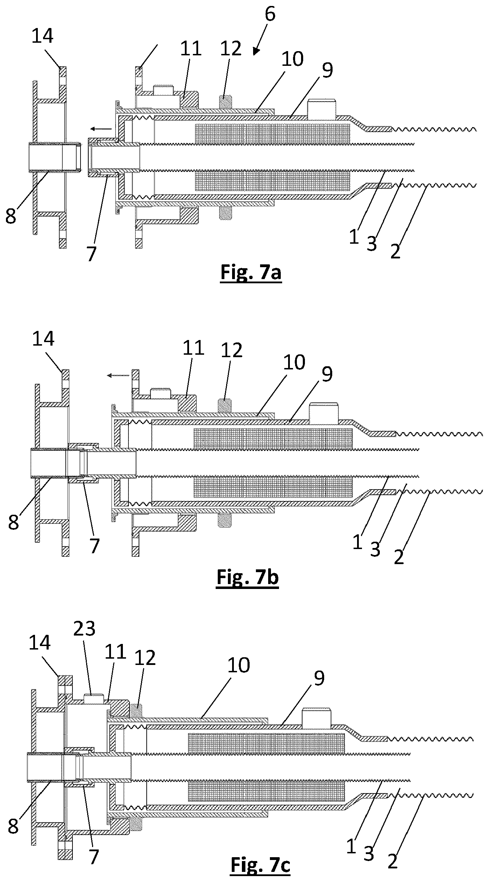

Die Fig. 7a, 7b, 7c zeigen Schritte beim Schließen des Kuppelelements 6 an einen Tank und die dabei mögliche schnelle und einfache Inertisierung des Kupplungsraums.

Dabei zeigt Fig. 7a wie das Kuppelelement 6 an den Tank angenähert wird, um die Prozessleitung 1 mit der Tankprozessleitung 8 zu verbinden (in Pfeilrichtung). In Fig. 7b ist bereits die Überwurfmutter 7 um die Prozessleitungen 1, 8 geschlossen und die Schiebemuffe 11 wird in Richtung zum Tank verschoben (Pfeil) und mittels der Mutter 12 an den Anschlussflansch 14 geschlossen. Fig. 7c zeigt das angeschlossene Kuppelelement 6 mit geschlossener Überwurfmutter 7 und Mutter 12, so dass durch den Vakuumstutzen Kupplungsraum 23 ein Inertisieren oder Evakuieren des Kupplungsraums erfolgen kann. Nach Schließen der Kupplung kann somit über den Vakuumstutzen Kupplungsraum 23 an der Schiebemuffe 11 der relativ kleine, von Transferleitung und Tank getrennte Kupplungsraum schnell und einfach mit einem trägen Gas mit ausreichend hohem Verfestigungspunkt inertisiert werden oder evakuiert werden.

### Bezugszeichenliste

- 1: Prozessleitung
- 2: Isolationshülle
- 3: Isolationsraum
- 4: Schutzhülle
- 4.1, 4.2: Hüllenteil
- 5: Faltenbalg
- 6: Kuppelelement
- 7: Überwurfmutter
- 8: Tankprozessleitung
- 9: Endstück
- 10: Anschlusshülse
- 11: Schiebemuffe
- 12: Mutter
- 13: Anschlag der Anschlusshülse, Dichtung der Anschlusshülse
- 14: Anschlussflansch
- 15: Faltenbalg
- 16: Vakuumstutzen
- 17: Sorptionsmaterial
- 18: Schweißstelle Endstück
- 19: Schweißstelle Anschlusshülse
- 20: Dichtung Prozessleitung
- 21: Dichtung Anschlussflansch
- 22: Flanschfläche
- 23: Vakuumstutzen Kupplungsraum
- 24: Endhülse

## Patentansprüche

1. Thermisch isolierte Transferleitung für ein tiefkaltes Fluid, umfassend eine Prozessleitung (1) zur Führung des Fluids, eine radial außerhalb der Prozessleitung (1) liegende, entlang der Längsrichtung der Prozessleitung (1) verlaufende Isolationshülle (2), wobei zwischen der Prozessleitung (1) und der Isolationshülle (2) ein Isolationsraum (3), beispielsweise ein Vakuumraum, eingerichtet ist,
**dadurch gekennzeichnet, dass** die Prozessleitung (1) und die Isolationshülle (2) gemeinsam, zumindest abschnittsweise entlang ihrer Erstreckung in Längsrichtung der Transferleitung, eine U-Form oder V-Form oder Mäanderform oder Spiralform aufweisen.

2. Thermisch isolierte Transferleitung nach Anspruch 1,
**dadurch gekennzeichnet, dass** die Prozessleitung (1) zumindest abschnittsweise ein Wellrohr oder Wellschlauch ist und/oder die Isolationshülle (2) zumindest abschnittsweise ein Wellrohr oder Wellschlauch ist.

3. Thermisch isolierte Transferleitung nach zumindest einem der vorhergehenden Ansprüche,
**dadurch gekennzeichnet, dass** die Prozessleitung (1) und die Isolationshülle (2) gemeinsam, über im Wesentlichen die gesamte Erstreckung in Längsrichtung der Transferleitung, eine U-Form oder V-Form oder Mäanderform oder Spiralform aufweisen oder über zumindest 40%, bevorzugt zumindest 60 %, besonders bevorzugt zumindest 80% der Erstreckung in Längsrichtung der Transferleitung eine U-Form oder V-Form oder Mäanderform oder Spiralform aufweisen.

4. Thermisch isolierte Transferleitung nach zumindest einem der vorhergehenden Ansprüche,
**dadurch gekennzeichnet, dass** die Prozessleitung (1) und die Isolationshülle (2) konzentrisch zueinander angeordnet sind, wobei die Konzentrizität auch entlang derjenigen Abschnitte entlang der Erstreckung der Transferleitung in Längsrichtung besteht, die eine Mäanderform oder Spiralform aufweisen.

5. Thermisch isolierte Transferleitung nach zumindest einem der vorhergehenden Ansprüche,
**dadurch gekennzeichnet, dass** zwischen der Prozessleitung (1) und der Isolationshülle (2) Abstandshalter eingerichtet sind, um einen Abstand zwischen Prozessleitung (1) und Isolationshülle (2) sicherzustellen, auch entlang derjenigen Abschnitte entlang der Erstreckung der Transferleitung in Längsrichtung, die eine U-Form oder V-Form oder Mäanderform oder Spiralform aufweisen.

6. Thermisch isolierte Transferleitung nach zumindest einem der vorhergehenden Ansprüche,
**dadurch gekennzeichnet, dass** im Isolationsraum (3) ein Vakuum und/oder eine Feststoffisolation, und/oder ein Inertgas, zum Beispiel CO₂, und/oder eine thermisch reflektive Schicht, zum Beispiel eine Multilayer Insulation (MLI), eingerichtet ist.

7. Thermisch isolierte Transferleitung nach zumindest einem der vorhergehenden Ansprüche,
**dadurch gekennzeichnet , dass** im Isolationsraum (3) abschnittsweise ein Sorptionsmittel angeordnet ist, insbesondere Zeolith, Aktivkohle und/oder Getter, zum Beispiel Barium.

8. Thermisch isolierte Transferleitung nach zumindest einem der vorhergehenden Ansprüche,
**dadurch gekennzeichnet , dass** eine Schutzhülle (4) entlang der Erstreckung der Isolationshülle (2) radial außerhalb der Isolationshülle (2) verläuft, wobei die Schutzhülle (4) bevorzugt nicht die Form der Isolationshülle (2) aufweist, wobei die Schutzhülle (4) besonders bevorzugt eine Zylindermantelform aufweist.

9. Thermisch isolierte Transferleitung nach Anspruch 8,
**dadurch gekennzeichnet , dass** zwischen der Schutzhülle (4) und der Isolationshülle (2) zumindest abschnittsweise ein Dämpfungsmaterial und/oder ein elastisches Material angeordnet ist.

10. Thermisch isolierte Transferleitung nach Anspruch 8 oder 9,
**dadurch gekennzeichnet, dass** die Schutzhülle (4) zumindest zwei axial gegeneinander bewegbare Hüllenteile (4.1, 4.2) umfasst, wobei die Hüllenteile (4.1, 4.2) bevorzugt durch einen Faltenbalg (5) und/oder eine Tülle und/oder eine Hülse miteinander verbunden sind und/oder radial geschachtelt sind, so dass ein Hüllenteil (4.1) in einem Überlappungsabschnitt radial innerhalb oder außerhalb des anderen Hüllenteils (4.2) verschiebbar ist.

11. Thermisch isolierte Transferleitung nach zumindest einem der vorhergehenden Ansprüche,
**dadurch gekennzeichnet, dass** ein Kuppelelement (6) zur Anbindung der Transferleitung an einen kryogenen Tank an zumindest einem Ende der Transferleitung ausgebildet ist, bevorzugt an beiden Enden.

12. Thermisch isolierte Transferleitung nach Anspruch 11,
**dadurch gekennzeichnet, dass** das Kuppelelement (6) eine Überwurfmutter (7) umfasst, die dazu eingerichtet ist, dass die Prozessleitung (1) der Transferleitung an einer Tankprozessleitung (8) befestigt wird, so dass eine fluidleitende Verbindung zwischen der Prozessleitung (1) und der Tankprozessleitung (8) hergestellt wird.

13. Thermisch isolierte Transferleitung nach zumindest einem der Ansprüche 11 bis 12,
**dadurch gekennzeichnet, dass** das Kuppelelement (6) ein Endstück (9) umfasst, wobei die Isolationshülle (2) der Transferleitung in das Endstück (9) übergeht.

14. Thermisch isolierte Transferleitung nach Anspruch 13,
**dadurch gekennzeichnet, dass** das Kuppelelement (6) eine Anschlusshülse (10) umfasst, wobei die Anschlusshülse (10) konzentrisch radial außen am Endstück (9) angeordnet ist und am Endstück (9) befestigt ist, bevorzugt verschweißt.

15. Thermisch isolierte Transferleitung nach zumindest einem der Ansprüche 13 bis 14,
**dadurch gekennzeichnet, dass** das Kuppelelement (6) eine Schiebemuffe (11) umfasst, wobei die Schiebemuffe (11) konzentrisch radial außen am Endstück (9) und/oder an der Anschlusshülse (10) angeordnet ist und gegenüber dem Endstück (9) und/oder der Anschlusshülse (10) axial verschiebbar ist.

16. Thermisch isolierte Transferleitung nach Anspruch 15,
**dadurch gekennzeichnet, dass** eine Mutter (12) konzentrisch radial außen an der Anschlusshülse (10) angeordnet ist und dazu eingerichtet ist, die Schiebemuffe (11) axial gegen einen Anschlag (13) der Anschlusshülse (10) und/oder axial gegen einen Anschlussflansch (14) des kryogenen Tanks zu drücken.

17. Thermisch isolierte Transferleitung nach zumindest einem der Ansprüche 14 bis 16,
**dadurch gekennzeichnet, dass** das Endstück (9) in einem axialen Abschnitt, in dem das Endstück (9) von der Anschlusshülse (10) umgeben ist, zumindest abschnittsweise durch einen Faltenbalg (15) gebildet ist.

18. Thermisch isolierte Transferleitung nach zumindest einem der Ansprüche 13 bis 17,
**dadurch gekennzeichnet, dass** das Endstück (9) einen Vakuumstutzen (16) aufweist, wobei durch den Vakuumstutzen (16) ein Vakuum im Isolationsraum (3) herstellbar ist oder der Isolationsraum (3) mit einem Inertgas geflutet werden kann, und/oder dass innerhalb des Endstücks (9) ein Sorptionsmaterial (17) angeordnet ist, insbesondere Zeolith, Aktivkohle und/oder Getter, zum Beispiel Barium.
